# EUROPÄISCHE PATENTSCHRIFT

(11) **EP 2 835 719 B1**
(45) Veröffentlichungstag und Bekanntmachung des Hinweises auf die Patenterteilung: **12.09.2018**
(21) Anmeldenummer: 14175219.6
(22) Anmeldetag: 01.07.2014
(51) Int. Cl.: G06F 3/01, B60K 37/06, G06F 3/0482

(54) **Kraftfahrzeug mit umschaltbarer Bedieneinrichtung**
Motor vehicle with switchable operating device
Véhicule automobile doté d'un dispositif de commande commutable

(30) Priorität: 08.08.2013 DE 102013013225
(43) Veröffentlichungstag der Anmeldung: 11.02.2015
(73) Patentinhaber: Volkswagen Aktiengesellschaft, 38440 Wolfsburg (DE)
(72) Erfinder: Schlittenbauer, Michael, 85055 Ingolstadt (DE); Roehder, Martin, 85049 Ingolstadt (DE); Maiwand, Heiko, Foster City, CA 94404 (US); Coser, Nathaniel, Palo Alto, CA 94306 (US); Bohrer, Lorenz, 80333 München (DE); Strauch, Alexander, 57074 Siegen (DE)

(56) Entgegenhaltungen:
- WO-A2-2007/121977
- DE-A1-102008 052 485
- DE-A1-102011 084 345
- US-A1- 2006 248 475
- US-A1- 2013 155 237

## Beschreibung

Die Erfindung betrifft ein Kraftfahrzeug mit einer Bedieneinrichtung zum abwechselnden Bedienen von zumindest zwei unterschiedlichen Komponenten des Fahrzeuges, also beispielsweise zum Bedienen einer Navigationseinrichtung und eines Mobiltelefons. Eine solche Bedieneinrichtung kann beispielsweise Bestandteil eines Infotainmentsystems des Kraftfahrzeugs sein. Die Bedieneinrichtung umfasst eine Anzeigeeinrichtung, auf welcher für jede der Komponenten jeweils eine graphische Nutzerschnittstelle zum Auswählen und Aktivieren von Funktionen der Komponente angezeigt werden können. Zum Bedienen der Komponenten, also beispielsweise zum Bedienen des Navigationssystems, können auf einer Anzeigeeinrichtung, wie beispielsweise einem Bildschirm in einer Schalttafel des Kraftfahrzeugs, die verfügbaren Funktionen angezeigt werden, so dass der Benutzer durch Bedienen von Tasten eine Funktion daraus auswählen und aktivieren kann. Auch das Auswählen mittels Sprachsteuerung kann vorgesehen sein. In der Regel sind die Funktionen in einer Menüstruktur mit Untermenüs zusammengefasst.

Das Aktivieren einer jeweiligen Nutzerschnittstelle für eine bestimmte Komponente erfolgt im Stand der Technik meist ebenfalls durch dedizierte Tasten auf einem Bedienteil des Kraftfahrzeugs. Beispielsweise gibt es also eine Taste für die Navigationseinrichtung, eine für die Medienwiedergabe zum Aktivieren des Radios und des MP3-Abspielgerätes, und eine weitere Taste für das Aktivieren des Telefons vorgesehen sein. Solche Tasten sind örtlich definiert und müssen meist vom Fahrer vor Betätigung durch Hinschauen geortet werden. Diese Ortung lenkt vom Fahrbetrieb ab.

Aus der DE 10 2006 009 291 A1 ist hierzu eine Vorrichtung zum Betreiben von zumindest zwei Funktionskomponenten eines Systems, wie beispielsweise eines Kraftfahrzeugs, bekannt. Bei diesem System wird eine der Funktionskomponenten zum weiteren Bedienen durch zumindest ein akustisches Signal ausgewählt. Problematisch kann hierbei sein, dass bei lauten Umgebungsgeräuschen im Kraftfahrzeuginnenraum die Spracherkennung versagt.

Aus der DE 10 2008 048 325 A1 ist ein Betätigungseingabegerät bekannt, durch welches eine Hand des Benutzers mit einer Kamera gefilmt wird und anhand der Kameradaten durch eine Segmentierung auf Basis von Farbtoninformationen die Hand und ihre momentane Stellung im Raum erkannt wird. In Abhängigkeit von der erkannten Stellung wird eine Menüdarstellungseinrichtung gesteuert. Nachteilig bei dieser Anordnung ist, dass jeweils nur eine Komponente gesteuert werden und zum Wechseln zwischen Nutzerschnittstellen auf andere Bedienmöglichkeiten, wie beispielsweise einen Taster, zurückgegriffen werden muss, um Zweideutigkeiten zwischen einem Wechselwunsch einerseits und einem Bedienwunsch innerhalb einer bestimmten Menüstruktur andererseits sicher unterscheiden zu können.

Aus der DE 10 2008 052 485 A1 ist ein Verfahren zum Anzeigen und Interagieren mit in Listen angeordneten Informationen bezüglich Einrichtungen eines Kraftfahrzeugs bekannt. Dabei können eine Mehrzahl grafischer Objekte auf einer Anzeigefläche des Kraftfahrzeugs angezeigt werden, wobei jedes grafische Objekt einer Einrichtung des Kraftfahrzeugs (z.B. Klimasteuerung, Musikwiedergabeeinrichtung, Navigationssystem) zugeordnet ist. Die grafischen Objekte sind dabei auf einem perspektivischen Ring angeordnet, wobei eines der Objekte im Vordergrund dargestellt ist. Durch Eingabe einer optisch erfassten Wischgeste wird der perspektivische Ring um einen von der Länge der Wischgeste abhängigen Drehwinkel gedreht und das nach der Drehung im Vordergrund stehende Objekt automatisch aktiviert, so dass dem aktiven Objekt zugeordnete Fahrzeugfunktionen betätigt werden können. Weiterhin wird auch beschrieben, dass der perspektivische Ring mittels auf der Anzeigefläche angezeigter Schaltflächen zur nächsten Position im Uhrzeigersinn bzw. entgegen dem Uhrzeigersinn gedreht werden kann, woraufhin automatisch das nun im Vordergrund stehende nächste Objekt aktiviert wird.

Aus der US 2013/0155237 A1 ist ein Kraftfahrzeug bekannt, dass es dem Fahrer erlaubt Eingaben durch optisch erfasste Gesten durchzuführen. Insbesondere wird beschrieben, dass ein auf einer Anzeigevorrichtung des Kraftfahrzeugs dargestellter Ring sequenziell geordneter Elemente durch eine Geste, bei der die rechte Hand des Fahrers mit ausgestrecktem Daumen nach links oder rechts bewegt wird, zur nächsten Position im Uhrzeigersinn bzw. entgegen dem Uhrzeigersinn gedreht werden kann.

Die US 2006/0248475 A1 beschreibt eine grafische Benutzerschnittstelle zur Interaktion mit Menüs, und insbesondere zum Navigieren und Auswählen von grafischen Menütafeln, die auf einem Bildschirm in halbkreisförmiger Anordnung dargestellt sind. Jeder der Menütafeln ist dabei ein Lesezeichen bzw. ein Ordner mit Lesezeichen zugeordnet. Die am Scheitelpunkt des drehbaren Halbkreises angezeigte Menütafel ist durch eine Auswahlumrandung optisch hervorgehoben. Wird das Menü verlassen, so wird die jeweils zuletzt hervorgehobene Menütafel gespeichert, um sie später bei Wiederaufruf des Menüs erneut mit der Auswahlumrandung darzustellen.

Weitere Verfahren zur Steuerung von Komponenten eines Kraftfahrzeugs mittels im dreidimensionalen Raum ausgeführter Gesten sind aus der WO 2007/121977 A2 und DE 10 2011 084 345 A1 bekannt.

Der Erfindung liegt die Aufgabe zugrunde, einem Nutzer in einem Kraftfahrzeug einen schnellen Wechsel zwischen unterschiedlichen Nutzerschnittstellen für Komponenten des Kraftfahrzeugs zu ermöglichen und hierbei eine Ablenkung vom Verkehrsgeschehen gering zu halten.
Die Aufgabe wird durch ein Kraftfahrzeug gemäß Patentanspruch 1 gelöst. Vorteilhafte Weiterbildungen der Erfindung sind durch die Unteransprüche gegeben.
Das erfindungsgemäße Kraftfahrzeug geht von einer an sich bekannten Bedienrichtung aus, welche zum Bedienen von zumindest zwei unterschiedlichen Komponenten des Kraftfahrzeugs ausgelegt ist, also beispielsweise zum Bedienen einer Navigationseinrichtung und eines Mobiltelefons des Kraftfahrzeugs. Die Bedieneinrichtung weist hierzu eine Anzeigeeinrichtung auf, also beispielsweise einen Bildschirm, der etwa in einer Schalttafel des Kraftfahrzeugs angeordnet sein kann. Die Bedieneinrichtung ist dabei dazu ausgelegt, auf der Anzeigeeinrichtung für jede der Komponenten eine eigene graphische Nutzerschnittstelle zum Auswählen und Aktivieren von Funktionen der Komponente anzuzeigen. Es ist dabei jeweils nur eine der Nutzerschnittstellen zur Zeit aktiv. Es muss also zwischen den Nutzerschnittstellen gewechselt werden. Die genannte Bedieneinrichtung kann beispielsweise ein Infotainmentsystem des Kraftfahrzeugs umfassen.
Zur Lösung der genannten Aufgabe ist bei dem erfindungsgemäßen Kraftfahrzeug eine Erkennungseinrichtung vorgesehen, die dazu ausgelegt ist, eine von einem Benutzer mit der Hand ausgeführte Bediengeste optisch zu erfassen und zu erkennen, ob der Benutzer mit der Hand eine einzelne, vorbestimmte Wechselgeste ausführt. Wichtig bei der Erfindung ist hierbei, dass es prinzipiell dem Benutzer möglich ist, immer dieselbe Wechselgeste auszuführen. Bei Erkennen der Wechselgeste wird durch die Erkennungseinrichtung ein Wechselsignal an die Bedieneinrichtung übertragen. Die Bedieneinrichtung ist entsprechend dazu ausgelegt, bei Empfangen des Wechselsignals gemäß einer vorbestimmten Wechselreihenfolge zyklisch von einer gerade aktiven Nutzerschnittstelle zur in der Wechselreihenfolge nächsten Nutzerschnittstelle zu wechseln und diese zu aktivieren.

Bei dem erfindungsgemäßen Kraftfahrzeug kann der Benutzer also durch wiederholtes Ausführen der Wechselgeste nacheinander zwischen den einzelnen Nutzerschnittstellen wechseln, die dann entsprechend auf der Anzeigeneinrichtung angezeigt werden. Erreicht der Benutzer dann in der Wechselreihenfolge die letzte Nutzerschnittstelle und führt er noch einmal die Wechselgeste aus, so wird zyklisch wieder von vorne begonnen und die in der Wechselreihenfolge erstgenannte Nutzerschnittstelle aktiviert. Bei der Erkennungseinrichtung kann es sich beispielsweise um einen in der Ausgestaltung an sich bekannten Gestenerkenner handeln oder aber auch beispielsweise um eine Lichtschrankenanordnung, welche eine Bewegung der Hand entlang einer bestimmten Richtung durch mehrere einzelne Lichtschranken und eine Zeitfolge ihrer Unterbrechung erkennt.

Das erfindungsgemäße Kraftfahrzeug weist den Vorteil auf, dass der Benutzer ohne Hinschauen, das heißt ohne den Blick vom Verkehrsgeschehen abzuwenden, durch die Bediengeste alle in der Wechselreihenfolge aufgeführten Nutzerschnittstellen nacheinander mit immer derselben Wechselgeste aktivieren kann. Der Benutzer oder Bediener kann also ohne Aufmerksamkeitsverlust mit nur einer einzelnen Bediengeste jede Nutzerschnittstelle erreichen.

Bevorzugt ist dann vorgesehen, dass zum Bedienen der eigentlichen Nutzerschnittstelle wieder Tasten durch die Bedieneinrichtung zu verwenden sind. Mit anderen Worten wird nach dem Aktivieren einer Nutzerschnittstelle zum Auswählen der über die Nutzerschnittstelle dargebotenen Funktionen nicht auf Gestensteuerung zurückgegriffen, sondern die Auswahl und Aktivierung von Funktionen findet in Abhängigkeit von der Bedienung eines Bedienelements, wie beispielsweise einer oder mehrerer Tasten, eines Dreh-Drück-Stellers und/oder eines Touchpads oder Touchscreens statt. Hierdurch ergibt sich der Vorteil, dass der Benutzer schnell mittels einer Geste zwischen den Nutzerschnittstellen wechseln kann, dann aber eine eindeutige und zuverlässig von der Bedieneinrichtung erkennbare Auswahl durch Bedienelemente erfolgt.
Bevorzugt wird durch die Bedieneinrichtung jeweils eine Nutzerschnittstelle für Navigation, Medienwiedergabe und Telefonie bereitgestellt. Dies sind nach Benutzerbeobachtungen die im Fahrbetrieb zumeist benötigten Funktionen. Die Ausführungsform weist so den Vorteil auf, dass mit einer einzelnen Wechselgeste diese wichtigsten Funktionen angesteuert werden können. Bevorzugt sind genau die drei genannten Nutzerschnittstellen vorgesehen, d.h. nicht mehr als diese drei.
Eine einzelne Nutzerschnittstelle kann beispielsweise eine Menüstruktur mit Menüeinträgen und Untermenüs aufweisen. In diesem Zusammenhang sieht eine vorteilhafte Weiterbildung des Kraftfahrzeugs vor, dass beim Wechseln der Nutzerschnittstelle von der Bedieneinrichtung bei der neu aktivierten Nutzerschnittstelle eine vorbestimmte Menüposition in der Menüstruktur eingestellt wird. Hierdurch kann in vorteilhafter Weise erreicht werden, dass der Benutzer sich innerhalb der Menüstruktur gleich an einem bekannten Einsprungspunkt befindet, so dass er mit sehr wenigen weiteren Bedienhandlungen an einem Bedienelement routiniert die gewünschte Funktion erreichen und auswählen kann.

Ein anderer Vorteil ergibt sich erfindungsgemäß dadurch, dass vor dem Wechseln zwischen zwei Nutzerschnittellen zu der gerade noch aktiven Nutzerschnittstelle eine aktuelle Menüposition gespeichert wird. Diese wird dann bei erneutem Aktivieren der Nutzerschnittstelle direkt angesprungen. Mit anderen Worten befindet sich der Benutzer dann an der Stelle in der Menüstruktur, an welcher er die Nutzerschnittstelle verlassen hat. Möchte der Benutzer also beispielsweise gerade ein Navigationsziel eingeben und stellt er dabei aber fest, dass im Radio eine Sendung begonnen hat, die er nicht hören möchte, kann der Benutzer von der Navigationseinrichtung mittels der Wechselgeste zu der Nutzerschnittstelle für das Radio wechseln und dort den Sender wechseln. Dann kann er wieder zurück zur Nutzerschnittstelle für die Navigationseinrichtung wechseln. Er befindet sich dann dort gleich an der Menüposition, an welcher er die Nutzerschnittstelle für die Navigationseinrichtung verlassen hat und kann weitermachen.
Ein besonderer Vorteil ergibt sich hierbei, wenn die Erkennungseinrichtung zusätzlich dazu ausgelegt ist, eine weitere Wechselgeste zum Wechseln entgegen der Wechselreihenfolge zu erkennen, und bei Erkennen der weiteren Wechselgeste ein entsprechend anderes Wechselsignal an die Bedieneinrichtung auszugeben. Diese ist dann entsprechend dazu ausgelegt, bei Empfangen des anderen Wechselsignals die Nutzerschnittstelle entgegen der Wechselreihenfolge zyklisch zu wechseln. Mit anderen Worten kann der Benutzer also in der Wechselreihenfolge vor und zurück zyklisch wechseln. Im Zusammenhang mit dem oben beschrieben Beispiel kann also eine einzelne Wechselgeste ausreichen, um von der Navigationseinrichtung zum Radio zu wechseln, und dann die weitere Wechselgeste, um wieder zurück zu der Navigationseinrichtung zu wechseln, ohne zyklisch einmal durch die gesamte Wechselreihenfolge vorwärts durchwechseln zu müssen.
Eine besonders bevorzugte Ausführungsform der Erfindung sieht in diesem Zusammenhang vor, dass durch die Bedieneinrichtung genau drei Nutzerschnittstellen, insbesondere nämlich je eine für Navigation, Medienwiedergabe und Telefonie, bereitgestellt sind und die drei Nutzerschnittstellen durch die zyklische Wechselreihenfolge ein Karussell bilden, d.h. sowohl mit der ersten Wechselgeste in eine Richtung zyklisch gemäß der Wechselreihenfolge zwischen den drei Nutzerschnittstellen gewechselt werden also auch mit der anderen Wechselgeste in umgekehrter Wechselreihenfolge zyklisch gewechselt werden kann. Da aber nur drei Nutzerschnittstellen von der Wechselreihenfolge umfasst sind, ergibt sich der besondere Effekt, dass durch die Anordnung zu jeder Nutzerschnittstelle mit nur einer einzigen Wechselgeste gewechselt werden kann. Dies ist mit mehr als drei Nutzerschnittstellen nicht möglich.
Um dem Benutzer eine bessere Orientierung zu geben, welche Nutzerschnittstelle die nächste in der Wechselreihenfolge und welche die vorangehende ist, sieht eine vorteilhafte Weiterbildung des Kraftfahrzeugs vor, dass die Bedieneinrichtung auf der Anzeigeeinrichtung die gerade aktive Nutzerschnittstelle und zusätzlich einen jeweiligen Teil zumindest einer momentan inaktiven Nutzerschnittstelle gemeinsam anzeigt. Beispielsweise kann also die aktive Nutzerschnittstelle mittig auf der Anzeigeeinrichtung dargestellt werden und rechts und/oder links am Rand ein Teil der in der Wechselreihenfolge nachfolgenden oder vorangehenden Nutzerschnittstelle. Dann sieht der Benutzer auf einem Blick, ob er die Wechselgeste oder die (zum Rückwärtswechseln) nötige andere Wechselgeste ausführen muss, um zu seiner gewünschten Nutzerschnittstelle zu gelangen. Besonders vorteilhaft ist, wenn die Darstellung mit den inaktiven Nutzerschnittstellen nur dann angezeigt wird, falls sich die Hand in einem vorbestimmten Raumbereich befindet, in welchem insbesondere auch die eigentliche Gestenerfassung stattfindet. Wird die Hand aus diesem Raumbereich heraus bewegt, so kann vorgesehen sein, ausschließlich die aktive Nutzerschnittstelle darzustellen, die dann in vorteilhafter Weise entsprechend größer dargestellt werden kann.

Wie bereits ausgeführt, kann es sich bei der Erkennungseinrichtung für die Wechselgeste um eine verhältnismäßig einfach zu realisierende Anordnung von lichtempfindlichen Sensoren, insbesondere Lichtschranken, handeln. Bevorzugt ist allerdings vorgehen, dass die Erkennungseinrichtung als einen optischen Sensor zum optischen Erfassen eine Kamera, insbesondere eine PMD-Kamera (PMD - Photonic Mixing Device, auch bekannt als Time-Of-Flight-Kamera) umfasst. Diese ist dann dazu ausgelegt, zu der Hand 3D-Videobildaten zu erzeugen. Die Verwendung einer PMD-Kamera weist den Vorteil auf, dass auf der Grundlage der 3D-Videobildaten nicht nur eine Bewegung quer zu einer optischen Achse der Kamera, sondern auch eine Veränderung des Abstands der Hand bezüglich der PMD-Kamera, also eine Bewegung entlang der optischen Achse, ausgewertet werden kann. Zudem lässt sich mittels 3D-Videobildaten ein frei im Raum befindliches Objekt, wie eine Hand, deutlicher von einem weiter entfernten Hintergrund unterscheiden und damit auch in den 3D-Videobildaten zuverlässiger segmentieren.

Im Zusammenhang mit der PMD-Kamera und aber auch allgemein im Zusammenhang mit einem optischen Sensor der Erkennungseinrichtung ist bevorzugt vorgesehen, dass dieser in einem Fahrzeuginnenraum des Kraftfahrzeugs an einem Fahrzeugdach über einer Mittelkonsole oder über einer Schalttafel angeordnet ist. Eine optische Erfassung von der Perspektive des Dachhimmels des Kraftfahrzeugs aus weist den Vorteil auf, dass die Hand während des Erkennungsprozesses nur mit einer sehr geringen Wahrscheinlichkeit von anderen Objekten im Kraftfahrzeug verdeckt ist.

Eine weitere Ausführungsform des Kraftfahrzeugs sieht vor, dass die Bedieneinrichtung dazu ausgelegt ist, nach dem Wechseln von einer Nutzerschnittstelle zur nächsten eine Ansage zu erzeugen, welche angibt, welche Nutzerschnittstelle nun aktiv ist. Hierdurch ergibt sich der Vorteil, dass der Nutzer nicht den Blick vom Verkehrsgeschehen abwenden muss, um zu überprüfen, welche Nutzerschnittstelle er gerade durch Ausführen der Wechselgeste aktiviert hat.

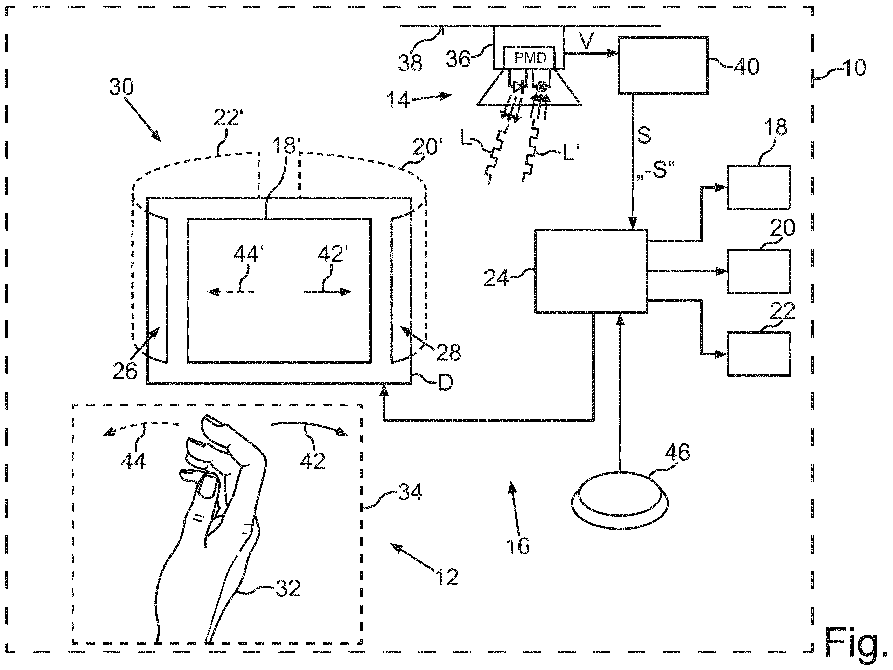

Im Folgenden ist die Erfindung noch einmal anhand eines konkreten Ausführungsbeispiels erläutert. Hierzu zeigt die einzige Figur eine schematische Darstellung einer Ausführungsform des erfindungsgemäßen Kraftfahrzeugs.

Bei dem im Folgenden erläuterten Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Figur ist von einem Kraftfahrzeug 10 dessen Fahrzeuginnenraum 12, also der Fahrraum, gezeigt. Bei dem Kraftfahrzeug 10 kann es sich beispielsweise um einen Kraftwagen, insbesondere einen Personenkraftwagen, handeln.

Kraftwagen 10 weist eine Erkennungseinrichtung 14, eine Bedieneinrichtung 16 und mehrere unterschiedliche Funktionseinheiten oder Komponenten 18, 20, 22 auf. Unter einer Komponente ist im Zusammenhang mit der Erfindung ein Bestandteil des Kraftfahrzeugs zu verstehen, welches eine bestimmte Funktionengruppe bereitstellt, also beispielsweise Telefonie, Medienwiedergabe, Navigation, Klimaeinstellung, Sitzeinstellung, Internet-Browsing, Darstellen und Verfassen von E-Mails. In dem gezeigten Beispiel kann vorgesehen sein, dass die Komponente 18 eine Navigationseinrichtung, die Komponente 20 eine Medienwiedergabeeinrichtung und die Komponente 22 eine Telefonieeinrichtung des Kraftfahrzeugs 10 ist.

Die Bedieneinrichtung 16 ist zum Bedienen der Komponenten 18, 20, 22 ausgelegt. Sie umfasst eine Steuereinheit 24 zum Erzeugen von Steuersignalen für die Komponenten 18, 20, 22 und eine Anzeigeneinrichtung D, beispielsweise einen Bildschirm, auf welchem für jede der Komponenten 18, 20, 22 jeweils eine graphische Nutzerschnittstelle 18', 20', 22' bereitgestellt werden kann, anhand welcher ein Benutzer die zu aktivierende Funktion der zugehörigen Komponente 18, 20, 22 auswählen kann. Die Bezugszeichen sind in der Figur derart gewählt, dass von jeder der Komponenten 18, 20, 22 die zugehörige Nutzerschnittstelle 18', 20', 22' dasselbe Bezugszeichen in gestrichener Form aufweist. Bei der Steuereinheit 24 kann es sich beispielsweise um eine Steuergerät oder eine zentrale Recheneinrichtung oder einen Teil eines Infotainmentsystems des Kraftfahrzeugs 10 handeln.
Bei der Bedieneinrichtung 16 ist jeweils nur eine Nutzerschnittstelle 18', 20', 22' zur Zeit aktiv. In der Figur wird gezeigt, dass gerade die Nutzerschnittstelle 18', aktiv ist. Die aktive Nutzerschnittstelle 18' wird durch die Bedieneinrichtung 16 in dem gezeigten Beispiel vollständig auf der Anzeigerichtung D dargestellt. Von den verbleibenden, inaktiven Nutzerschnittstellen 20', 22' ist auf der Anzeigeeinrichtung D nur ein Teil 26, 28 dargestellt. In der Figur ist symbolisch dargestellt, dass die Nutzerschnittstellen insgesamt ein Karussell 30 bilden, das heißt durch Wechseln von der aktiven Nutzerschnittstelle 18' zu einer der benachbarten Nutzerschnittstellen 20', 22' und einem nochmaligen Wechseln in derselben Wechselrichtung wird wie bei einem Karussell zyklisch immer die nächstkommende Nutzerschnittstelle aktiviert. Das Karussell 30 legt also eine zyklische Wechselreihenfolge fest.
In Abhängigkeit davon, welche Nutzerschnittstelle 18' gerade aktiv ist, kann dann vorgesehen sein, dass der Benutzer an der Nutzerschnittstelle 18' mit einem oder mehreren anderen Bedienelementen Funktionen auswählen, die dann durch ein entsprechendes Steuersignal der Steuereinheit 24 bei der Komponente 18 aktiviert werden. Beispielsweise kann ein Bedienelement 46 ein Dreh-Drück-Steller, DDS, sein. Die weitere Bedienung der Nutzerschnittstelle erfolgt also mittels Bedienelementen wie dem DDS.
Zum Wechseln der Nutzerschnittstelle braucht ein Benutzer mit einer Hand 32 lediglich eine einfache Wechselgeste auszuführen. Hierzu kann vorgesehen sein, dass er die Hand 32 zunächst in ein vorbestimmtes Raumvolumen 34 halten muss. Hierbei kann auch vorgesehen sein, dass erst, wenn die Hand 32 sich in dem Raumvolumen 34 befindet, die in der Figur dargestellte Anzeige auf der Anzeigeeinrichtung D angezeigt wird, also die Darstellungsweise mit der aktiven Nutzerschnittstelle 18' und auch den beiden Teilen 26, 28 der inaktiven Nutzerschnittstellen. Befindet sich die Hand 32 dagegen außerhalb des Raumvolumens 34, so kann vorgesehen sein, dass die aktive Nutzerschnittstelle 18' die Anzeigeeinrichtung D vollständig ausfüllt. Die Teile 26, 28 werden dann nicht angezeigt.

Die Hand wird optisch von der Erkennungseinrichtung 14 erfasst. Die Erkennungseinrichtung 14 umfasst hierzu einen optischen Sensor 36, bei dem es sich insbesondere um eine PMD-Kamera handeln kann. Die PMD-Kamera strahlt dann beispielsweise ein intensitätsmoduliertes Licht L, insbesondere ein entsprechendes Infrarotlicht, in den Kraftfahrzeuginnenraum 12 ab und empfängt ein von den Objekten zurückgeworfenes Licht L'.
Bevorzugt wird der optische Sensor 36 an einem Fahrzeugdach 38 angeordnet. Ein Videosignal V des optischen Sensors 36 wird an eine Berechnungseinheit 40 der Erkennungseinrichtung 14 übertragen. Die Erkennungseinrichtung 14 erkennt auf Grundlage der Videodaten V eine von der Hand 32 ausgeführte Geste. Beispielsweise kann durch die Berechnungseinheit 40 erkannt werden, wenn der Benutzer mit seiner Hand 32 eine Schwenkbewegung in eine erste Wechselrichtung 42 ausführt. Die Berechnungseinheit 40 kann hierzu beispielsweise ein Körpermodell oder ein Skelettmodell in die in den Videodaten V enthaltene Darstellung oder Abbildung der Hand 32 einpassen. Hierzu kann beispielsweise auf eine Funktionsbibliothek zurückgegriffen werden, wie sie unter der Bezeichnung "Kinect" des Unternehmens Microsoft erhältlich ist.
Wird erkannt, dass die Hand 32 die Schwenkbewegung in die Wechselrichtung 42 ausführt, signalisiert die Berechnungseinheit 40 dies an die Steuereinheit 24 als ein Wechselsignal S. Die Steuereinheit 24 wechselt dann zwischen den Nutzerschnittstellen, das heißt die derzeit aktive Nutzerschnittstelle 18' wird deaktiviert und es wird z.B. gemäß der Wechselrichtung 42 die Nutzerschnittstelle 18' in eine korrespondierende Richtung 42', beispielsweise in einer Animation, aus dem Darstellungsbereich der Anzeigeeinrichtung D bewegt und gemäß der Reihenfolge der Nutzerschnittstellen 18', 20', 22' im Karussell 30 die Nutzerschnittstelle 22' in den Darstellungsbereich der Anzeigeeinrichtung D bewegt und dann die Nutzerschnittstelle 22' aktiviert. Es kann auch vorgesehen sein, dass der Benutzer durch eine Schwenkbewegung der Hand 32 in eine entgegengesetzte Schwenkrichtung 44 ebenfalls einen Wechsel zwischen Nutzerschnittstellen 18', 20', 22' auslösen kann. Hierzu kann vorgesehen sein, dass die Berechnungseinheit 40 anhand der entsprechenden Videodaten V diese weitere Wechselgeste erkennt und entsprechend ein weiteres Wechselsignal -S (Minus S) an die Steuereinrichtung 24 übermittelt.
Dann wird entsprechend der Bewegungsrichtung 44 der Schwenkbewegung die Nutzerschnittstelle 18' in eine korrespondierende Gegenrichtung 44' gewechselt und die im Karussell 30 nächste Nutzerschnittstelle 20' auf der Anzeigeeinrichtung D dargestellt und aktiviert.
Durch den optischen Sensor 36 und seine Anordnung am Kraftfahrzeugdach 38 ist eine physikalisch einwandfreie Ortbarkeit des Insassen (insbesondere mit einer Time-Of-Flight-Kamera) und auch der Körperteile des Insassen, also beispielsweise seiner Hand 32 und einzelner Finger der Hand 32, ermöglicht. Dies erlaubt es, eine Bewegung der Hand 32 und einzelner Finger zu erkennen. Die im Fahrbetrieb zumeist benötigten Funktionen sind Navigation, Media und Telefon. Diese drei Komponenten 18, 20, 22 können dann jeweils Menüfunktionen, die in einer Menüstruktur mit Menüästen zusammengefasst sind, jeweils mit einer einzelnen Short-Cut-Geste, also der Bewegung beispielsweise in die Richtung 42, im Raum direkt angesteuert werden, das heißt es können die entsprechenden Nutzerschnittstellen 18', 20', 22' mit den jeweiligen Menüstrukturen aktiviert werden. Es ist so ein schneller Kontextwechsel durch Geste (ShortCut) ermöglicht. Diese Wechseloption ist mit keiner Taste in einem Fahrzeug abbildbar. Alle Menüäste sind dann im aktivierten Zustand weiterhin über Tasten oder ein anderes Bedienelement 46 bedienbar.
Insbesondere kann vorgesehen sein, dass man zum Wechseln zwischen den Nutzerschnittstellen in das vordefinierte Volumen 34 hineingreift, so dass die in der Figur skizzierte mögliche Darstellung zur Indikation eines von nun an möglichen Wechsels zwischen den Menüästen der Nutzerschnittstelle möglich ist. In der Figur sieht man auf der Anzeigeeinheit mittig den bisher aktuellen Screen, links und rechts davon die beiden anderen häufigsten Screens der Nutzerschnittstelle. Mit einer Geste nach links (Schwenkrichtung 44) wird dann zum Beispiel das Telefonmenü und mit einer Geste nach rechts (Schwenkrichtung 42) zum Beispiel das Navigationsmenü aufgerufen. In dieser Ansicht sind nur Navigation, Media und Telefon repräsentiert. Insgesamt ergibt sich so die Idee eines Karussells aus drei Menüpunkten nebeneinander zum schnellen Kontextwechsel für die Bedienung dreier der am häufigsten bedienten Komponenten in einem Kraftfahrzeug. Der Bediener kann so ohne Aufmerksamkeitsverlust mit nur einer einzelnen Bediengeste jede der am häufigsten frequentierten Menüäste erreichen.

## Patentansprüche

1. Kraftfahrzeug (10) mit einer Bedieneinrichtung (16) zum Bedienen von zumindest zwei unterschiedlichen Komponenten (18, 20, 22) des Kraftfahrzeugs (10), wobei die Bedieneinrichtung (16) hierzu eine Anzeigeeinrichtung (D) aufweist und dazu ausgelegt ist, auf der Anzeigeeinrichtung (D) für jede der Komponenten (18, 20, 22) eine graphische Nutzerschnittstelle (18', 20', 22') zum Auswählen und Aktivieren von Funktionen der Komponenten (18, 20, 22) anzuzeigen, wobei jeweils nur eine der Nutzerschnittstellen (18', 20', 22') zur Zeit aktiv ist, und wobei die Bedieneinrichtung (16) eine Erkennungseinrichtung (14) aufweist, die dazu ausgelegt ist, eine von einem Benutzer mit einer Hand (32) ausgeführte Bediengeste optisch zu erfassen und zu erkennen, ob der Benutzer mit der Hand (32) eine einzelne, vorbestimmte Wechselgeste ausführt, und bei Erkennen der Wechselgeste ein Wechselsignal (S) an die Bedieneinrichtung (16) zu übertragen, **dadurch gekennzeichnet,**
**dass** die Bedieneinrichtung (16) dazu ausgelegt ist, bei Empfangen des Wechselsignals (S) gemäß einer vorbestimmten Wechselreihenfolge zyklisch von einer gerade aktiven Nutzerschnittstelle (18') zur in der Wechselreihenfolge nächsten Nutzerschnittstelle (20') zu wechseln und diese zu aktivieren, und vor dem Wechseln eine aktuelle Menüposition in einer Menüstruktur mit Menüeinträgen und Untermenüs der gerade aktiven Nutzerschnittstelle (18') zu speichern, welche bei erneutem Aktivieren der Nutzerschnittstelle (18') direkt angesprungen wird.

2. Kraftfahrzeug (10) nach Anspruch 1, wobei durch die Bedieneinrichtung (16) jeweils eine Nutzerschnittstelle (18', 20', 22') für Navigation (18), Medienwiedergabe (20) und Telefonie (22) bereitgestellt ist.

3. Kraftfahrzeug (10) nach einem der vorhergehenden Ansprüche, wobei die Bedieneinrichtung (16) dazu ausgelegt ist, nach dem Wechseln bei der dann aktivierten Nutzerschnittstelle eine vorbestimmte Menüposition in einer Menüstruktur der Nutzerschnittstelle einzustellen.

4. Kraftfahrzeug (10) nach einem der vorhergehenden Ansprüche, wobei die Erkennungseinrichtung (14) dazu ausgelegt ist, eine weitere Wechselgeste zum Wechseln entgegen der Wechselreihenfolge zu erkennen und bei Erkennen der weiteren Wechselgeste ein entsprechendes weiteres Wechselsignal (-S) an die Bedieneinrichtung (16) auszugeben, und die Bedieneinrichtung (16) dazu ausgelegt ist, bei Empfangen des weiteren Wechselsignals (-S) die Nutzerschnittstelle entgegen der Wechselreihenfolge zyklisch zu wechseln.

5. Kraftfahrzeug (10) nach Anspruch 4, wobei durch die Bedieneinrichtung genau drei Nutzerschnittstellen (18', 20', 22'), insbesondere je eine für Navigation (18), Medienwiedergabe (20) und Telefonie (22), bereitgestellt sind und die drei Nutzerschnittstellen (18', 20', 22') durch die zyklische Wechselreihenfolge ein Karussell (30) bilden.

6. Kraftfahrzeug (10) nach einem der vorhergehenden Ansprüche, wobei die Bedieneinrichtung (16) dazu ausgelegt ist, auf der Anzeigeeinrichtung (D) die gerade aktive Nutzerschnittstelle (18') und einen jeweiligen Teil (26, 28) zumindest einer momentan inaktiven Nutzerschnittstelle (20', 22') gemeinsam anzuzeigen, zumindest falls sich die Hand (32) in einem vorbestimmten Raumbereich (34) befindet.

7. Kraftfahrzeug (10) nach einem der vorhergehenden Ansprüche, wobei die Erkennungseinrichtung (14) dazu ausgelegt ist, als eine Wechselgeste eine Bewegung und/oder Fingerstellung und/oder Bewegungsabfolge der Hand (32) zu erkennen.

8. Kraftfahrzeug (10) nach einem der vorhergehenden Ansprüche, wobei die Erkennungseinrichtung (14) als einen optischen Sensor (36) zum optischen Erfassen der Hand (32) eine PMD-Kamera (36) umfasst, die dazu ausgelegt ist, zu der Hand (32) 3D-Videobildaten (V) zu erzeugen.

9. Kraftfahrzeug (10) nach einem der vorhergehenden Ansprüche, wobei die Erkennungseinrichtung (14) einen optischen Sensor (36) aufweist, der in einem Fahrzeuginnenraum (12) des Kraftfahrzeugs (10) an einem Fahrzeugdach (38) über einer Mittelkonsole und/oder über einer Schalttafel angeordnet ist.

10. Kraftfahrzeug (10) nach einem der vorhergehenden Ansprüche, wobei die Bedieneinrichtung (16) dazu ausgelegt ist, nach dem Wechseln eine Ansage zu erzeugen, welche angibt, welche Nutzerschnittstelle aktiv ist.

## Claims

1. Motor vehicle (10) having an operator control device (16) for controlling at least two different components (18, 20, 22) of the motor vehicle (10), wherein the operator control device (16) to this end has a display device (D) and is designed to display a graphical user interface (18', 20', 22') for each of the components (18, 20, 22) on the display device (D) for the purpose of selecting and activating functions of the components (18, 20, 22), only one of the user interfaces (18', 20', 22') being active at a time, and wherein the operator control device (16) has a detection device (14) designed to optically capture a control gesture made by a user with one hand (32) and to detect whether the user makes a single, predetermined change gesture with his hand (32), and, on detection of the change gesture, to transmit a change signal (S) to the operator control device (16), **characterized in that** the operator control device (16) is designed so as, on receiving the change signal (S), to cyclically change, in a predetermined order of change, from a currently active user interface (18') to the next user interface (20') in the order of change and to activate the latter user interface, and, before changing, to store a current menu position in a menu structure with menu entries and submenus of the currently active user interface (18'), which is skipped to directly on fresh activation of the user interface (18').

2. Motor vehicle (10) according to Claim 1, wherein the operator control device (16) provides a respective user interface (18', 20', 22') for navigation (18), media reproduction (20) and telephony (22).

3. Motor vehicle (10) according to one of the preceding claims, wherein the operator control device (16) is designed so as, after changing, to set a predetermined menu position in a menu structure of the user interface for the user interface that is then activated.

4. Motor vehicle (10) according to one of the preceding claims, wherein the detection device (14) is designed to detect a further change gesture for changing contrary to the order of change and, on detecting the further change gesture, to output an appropriate further change signal (-S) to the operator control device (16), and the operator control device (16) is designed so as, on receiving the further change signal (-S), to change the user interface cyclically contrary to the order of change.

5. Motor vehicle (10) according to Claim 4, wherein the operator control device provides precisely three user interfaces (18', 20', 22'), in particular one each for navigation (18), media reproduction (20) and telephony (22), and the three user interfaces (18', 20' 22') form a carousel (30) by virtue of the cyclic order of change.

6. Motor vehicle (10) according to one of the preceding claims, wherein the operator control device (16) is designed to display the currently active user interface (18') and a respective portion (26, 28) of at least one presently inactive user interface (20', 22') together on the display device (D), at least if the hand (32) is in a predetermined spatial area (34).

7. Motor vehicle (10) according to one of the preceding claims, wherein the detection device (14) is designed to detect a movement and/or finger position and/or sequence of movements of the hand (32) as a change gesture.

8. Motor vehicle (10) according to one of the preceding claims, wherein the detection device (14) comprises a PMD camera (36) as an optical sensor (36) for optically capturing the hand (32), said PMD camera being designed to generate 3D video image data (V) for the hand (32).

9. Motor vehicle (10) according to one of the preceding claims, wherein the detection device (14) has an optical sensor (36) that is arranged in a vehicle interior (12) of the motor vehicle (10) on a vehicle roof (38) above a centre console and/or above a control panel.

10. Motor vehicle (10) according to one of the preceding claims, wherein the operator control device (16) is designed so as, after changing, to produce an announcement indicating which user interface is active.

## Revendications

1. Véhicule automobile (10) comprenant un dispositif de commande (16) servant à commander au moins deux composants (18, 20, 22) différents du véhicule automobile (10), le dispositif de commande (16) possédant à cet effet un dispositif d'affichage (D) et étant conçu pour afficher, sur le dispositif d'affichage (D), pour chaque composant (18, 20, 22) une interface utilisateur graphique (18', 20', 22') destinée à sélectionner et à activer des fonctions des composants (18, 20, 22), une seule des interfaces utilisateur graphiques (18', 20', 22') étant active à la fois et le dispositif de commande (16) possédant un dispositif de reconnaissance (14) qui est conçu pour détecter optiquement un geste de commande exécuté par un utilisateur avec une main (32) et reconnaître si l'utilisateur exécute avec la main (32) un geste de changement individuel prédéfini et, en cas de reconnaissance du geste de changement, transmettre un signal de changement (S) au dispositif de commande (16) ,
**caractérisé en ce que**
le dispositif de commande (16) est conçu pour, lors de la réception du signal de changement (S), changer cycliquement, conformément à une séquence de changement prédéfini, d'une interface utilisateur (18') actuellement active à une interface utilisateur (20') suivante dans la séquence de changement et activer celle-ci et, avant le changement, mettre en mémoire une position de menu actuelle dans une structure de menu comprenant des lignes de menu et des sous-menus de l'interface utilisateur (18') actuellement active, laquelle sera resélectionnée directement lors d'une nouvelle activation de l'interface utilisateur (18').

2. Véhicule automobile (10) selon la revendication 1, une interface utilisateur (18', 20', 22') pour la navigation (18), la lecture multimédia (20) et la téléphonie (22) étant respectivement fournie par le dispositif de commande (16).

3. Véhicule automobile (10) selon l'une des revendications précédentes, le dispositif de commande (16) étant conçu pour, après le changement, régler une position de menu prédéfinie dans une structure de menu de l'interface utilisateur au niveau de l'interface utilisateur qui est alors activée.

4. Véhicule automobile (10) selon l'une des revendications précédentes, le dispositif de reconnaissance (14) étant conçu pour reconnaître un geste de changement supplémentaire destiné à un changement à l'inverse de la séquence de changement et, lors de la reconnaissance du geste de changement supplémentaire, délivrer un signal de changement supplémentaire (-S) au dispositif de commande (16), et le dispositif de commande (16) étant conçu pour, lors de la réception du signal de changement supplémentaire (-S), changer cycliquement l'interface utilisateur à l'inverse de la séquence de changement.

5. Véhicule automobile (10) selon la revendication 4, exactement trois interfaces utilisateur (18', 20', 22'), notamment une respectivement pour la navigation (18), la lecture multimédia (20) et la téléphonie (22), étant fournies par le dispositif de commande (16) et les trois interfaces utilisateur (18', 20', 22') formant un carrousel (30) du fait de la séquence de changement cyclique.

6. Véhicule automobile (10) selon l'une des revendications précédentes, le dispositif de commande (16) étant conçu pour afficher ensemble sur le dispositif d'affichage (D) l'interface utilisateur (18') actuellement active et une partie (26, 28) respective d'au moins une l'interface utilisateur (20', 22') momentanément inactive, au moins dans le cas où la main (32) se trouve dans une zone d'espace (34) prédéfinie.

7. Véhicule automobile (10) selon l'une des revendications précédentes, le dispositif de reconnaissance (14) étant conçu pour reconnaître comme un geste de changement un mouvement et/ou une position de doigt et/ou une séquence de mouvements de la main (32) .

8. Véhicule automobile (10) selon l'une des revendications précédentes, le dispositif de reconnaissance (14) comprenant comme capteur optique (36) destiné à la détection optique de la main (32) une caméra PMD (36) qui est conçue pour générer des données d'image vidéo 3D (V) de la main (32).

9. Véhicule automobile (10) selon l'une des revendications précédentes, le dispositif de reconnaissance (14) possède un capteur optique (36) qui est disposé dans un habitacle de véhicule (12) du véhicule automobile (10) au niveau d'un toit de véhicule (38) au-dessus d'une console centrale et/ou au-dessus d'un tableau de bord.

10. Véhicule automobile (10) selon l'une des revendications précédentes, le dispositif de commande (16) étant conçu pour, après le changement, générer une annonce vocale qui indique l'interface utilisateur qui est active.
